Europäisches Patentamt

European Patent Office

Office européen des brevets

(19)

(11) Veröffentlichungsnummer: **0 215 967**
**B1**

(12)

# EUROPÄISCHE PATENTSCHRIFT

(45) Veröffentlichungstag der Patentschrift:
07.02.90

(51) Int. Cl.⁴: **B65G 1/137**

(21) Anmeldenummer: 85111825.7

(22) Anmeldetag: 18.09.85

(54) Verfahren und Vorrichtung zum rechnergesteuerten Zusammenstellen von Warensendungen.

(43) Veröffentlichungstag der Anmeldung:
01.04.87 Patentblatt 87/14

(45) Bekanntmachung des Hinweises auf die Patenterteilung:
07.02.90 Patentblatt 90/6

(84) Benannte Vertragsstaaten:
AT CH FR GB LI SE

(56) Entgegenhaltungen:
DE-A- 3 405 303
DE-C- 3 413 157

(73) Patentinhaber: **Ferd. Schulze & Co.,
Pfingstweidstrasse 10-12, D-6800 Mannheim 24(DE)**

(72) Erfinder: **Weber, Otto, Dipl.-Ing., Kurpfalzstrasse 21,
D-6945 Hirschberg(DE)**

(74) Vertreter: **Gudel, Diether, Dr. et al, Patentanwälte Dr. V.
Schmied-Kowarzik Dipl.-Ing. G. Dannenberg Dr. P.
Weinhold Dr. D. Gudel Dipl.-Ing. S. Schubert Dr. P. Barz
Grosse Eschenheimer Strasse 39, D-6000 Frankfurt am
Main 1(DE)**

## Beschreibung

Die Erfindung betrifft ein Verfahren und ein Kommissionierlager zum rechnergesteuerten Zusammenstellen von Warensendungen aus einem in verschiedene Zonen unterteilten Kommissionierlager, von denen in wenigstens einer Zone von Hand kommissioniert wird, wobei man die auftragsgebunden, zu befüllenden Kommissionierbehälter rechnergesteuert durch die für den betreffenden Auftrag, zu berücksichtigenden Zonen des Kommissionierlagers transportiert und diese dort auftragsgebunden befüllt.

Man hat bereits verschiedentlich vorgeschlagen, ein Kommissionierlager in verschiedene Zonen entsprechend der Entnahmehäufigkeit der Waren bzw. der Handhabbarkeit der Waren zu unterteilen und die Waren zonenspezifisch zu kommissionieren. Als Beispiel sei verwiesen auf die DE-OS 31 00 020. Dort ist das Kommissionierlager in insgesamt vier Zonen unterteilt, wobei man die Waren mit hoher Entnahmehäufigkeit dort von Hand kommissioniert. Hierzu sind in dieser Zone mehrere Arbeitsplätze vorgesehen, wobei jeweils ein Arbeiter die für seinen Bereich greifbaren Artikel in die an seinem Arbeitsplatz vorbeigeführten Kommissionierbehälter absammelt. Weitere Maßnahmen zur Optimierung des Kommissioniervorganges sind dort nicht vorgesehen.

Der Erfindung liegt daher die Aufgabe zugrunde, ein Verfahren und eine Vorrichtung zum rechnergesteuerten Zusammenstellen von Warensendungen der eingangs genannten Art vorzuschlagen, welches sich durch eine fühlbar erhöhte Kommissionierleistung, gemessen in in der Zeiteinheit kommissionierten Warensendungen, verbunden mit fühlbar verkürzten Wegezeiten beim Kommissionieren von Hand auszeichnet.

Zur Lösung dieser Aufgabe ist das eingangs genannte Verfahren erfindungsgemäß dadurch gekennzeichnet, daß man die von Hand zu kommissionierende Zone des Kommissionierlagers in Abschnitte unterteilt, daß man zu jedem der Abschnitte nur die dort zu befüllenden Kommissionierbehälter transportiert und aus diesen Kommissionierbehältern Gruppen bildet, die in einer Warteposition angehalten werden, daß man für jede dieser Gruppen die Waren dieses Abschnitts vom Rechner wegeoptimiert, in einen Satz Sammelbehälter absammelt und daß man darauf die in den Sammelbehältern befindlichen Waren, ebenfalls rechnergesteuert, an die diesen Sammelbehältern zugeordneten, wartenden Kommissionierbehälter übergibt, die man anschließend weitertransportiert.

Dieser insgesamt rechnergesteuerte und wegeoptimierte Verfahrensablauf ermöglicht, verglichen mit dem Stand der Technik, eine fühlbar verbesserte Kommissionierleistung, verbunden mit eingesparten Wegezeiten und Wartezeiten für die das Kommissionieren durchführenden Personen. Der Rechner entscheidet, welche der Kommissionierbehälter dem betreffenden Abschnitt zugeleitet werden. Beispielsweise wird der Rechner gegebenenfalls den einen oder anderen der Abschnitte von einigen der Kommissionierbehälter überholen lassen, so daß die Kommissionierbehälter direkt und ohne Umwege und Wartezeiten nur denjenigen Abschnitten zugeleitet werden, in denen Waren lagern, mit denen genau diese Kommissionierbehälter zu befüllen sind. Der Rechner bildet also gewissermaßen spontan aus dem ihm jeweils bekannten Auftragsbestand die erwähnten Gruppen der Kommissionierbehälter.

Diese werden nicht, wie beim eingangs geschilderten Stand der Technik der Fall, in dieser von Hand zu kommissionierenden Zone selbst befüllt, sondern der betreffende Sammler sammelt in dem ihm zugeordneten Abschnitt wegeoptimiert die dort gelagerten Waren in die erwähnten Sammelbehälter ein, wobei jedem dieser Sammelbehälter einer der Kommissionierbehälter in der Warteposition zugeordnet ist. Die Wegeoptimierung erfolgt über den Rechner. Der Arbeiter muß also nicht die – gegebenenfalls recht schweren – Kommissionierbehälter mit sich führen, sondern nur die anfangs leeren Sammelbehälter, die erst am Ende seiner Sammelstrecke befüllt sind. Weil die betreffenden Kommissionierbehälter warten, kann der Sammelvorgang ohne Wartezeiten für den Sammler vonstatten gehen. Stets warten soviele Sammelbehälter in der Warteposition, wie er mit Hilfe seiner Sammelbehälter bearbeitet. Anschließend müssen die bereits in die Sammelbehälter kommissionierten Waren lediglich in die den Sammelbehältern entsprechenden Kommissonierbehälter übergeben werden, worauf dann die Kommissionierung in diesem Abschnitt der von Hand zu kommissionierenden Zone des Kommissionierlagers beendet ist.

Das erfindungsgemäße Verfahren eignet sich besonders für diejenigen Waren, die eine verhältnismäßig geringe Entnahmehäufigkeit haben. Waren mit höherer Entnahmehäufigkeit wird man vorteilhaft mit Hilfe eines Automaten oder Halbautomaten kommissionieren.

Damit der Arbeiter Anweisungen für die Wegeoptimierung erhält, erstellt der Rechner für jede Gruppe der Sammelbehälter einen wegeoptimierten Beleg.

Die DE-A 3 100 020 beschreibt ein Kommissionierlager mit verschiedenen Zonen und mit einer Transporteinrichtung zum Transportieren von Kommissionierbehältern, ferner mit einem Rechner zum Zusammenstellen von Warensendungen aus den verschiedenen Zonen und mit wenigstens einer Zone, in der Artikel von Hand kommissioniert werden.

Zur Lösung der erwähnten Erfindungsaufgabe ist ein Kommissionierlager mit diesen Merkmalen erfindungsgemäß dadurch gekennzeichnet, daß zum Kommissionieren der Artikel in der von Hand zu kommissionierenden Zone Sammelbehälter (z.B. als Gefache ausgebildet) an einem von Hand fahrbaren Wagen vorgesehen sind, die in einer Übergabestation rechnergesteuert in den der betreffenden Kommission zugeordneten Kommissionierbehälter entleert werden.

In den erwähnten Abschnitten der betreffenden Zone werden also nicht die Kommissionierbehälter selbst befüllt, wie dies beim Stand der Technik der Fall ist, sondern die davon getrennten und leichten Sammelbehälter. Diese können leicht von Hand durch den betreffenden Abschnitt des Kommissionierlagers transportiert werden, und zwar mit Hilfe des erwähnten fahrbaren Wagens. Die Gefache, die also den vorstehend erwähnten Sammelbehältern entsprechen bzw. diese ausbilden, werden mit Hilfe dieses leichten, von Hand fahrbaren Wagens von derjenigen Person, die den betreffenden Abschnitt des Kommissionierlagers zu betreuen hat, durch diesen Abschnitt gefahren.

Die Übergabe der in die Gefache abgesammelten, auftragsgebundenen Artikel in die zugehörigen Kommissionierbehälter erfolgt vorzugsweise selbsttätig, d.h. ohne Einwirkung von Hand. Um dies durchführen zu können, wird es bevorzugt, wenn die Gefache an einer vom Gestell des fahrbaren Wagens trennbaren Wanne ausgebildet sind. Die Wanne wird über ein geeignetes Hebezeug vom eigentlichen Wagen abgehoben und es können dann die kommissionierten Artikel übergeben werden, ohne daß dazu die betreffende Person tätig werden muß.

Für die Übergabe der in den Gefachen befindlichen Waren in die bereits zugeordneten Kommissionierbehälter wird es bevorzugt, wenn die Gefachboden einzeln geöffnet und geschlossen werden können. Die Übergabe kann dann ebenfalls selbsttätig erfolgen.

Hierfür wird es bevorzugt, wenn die Übergabestation ein Hebezeug für die Wanne aufweist, das die Wanne mit den Gefachen über einen angetriebenen Förderer für die Kommissionierbehälter transportiert, wo ein Antrieb zum gesteuerten Öffnen und Schließen der Gefachböden vorgesehen ist. Mit Hilfe dieser Übergabestation, die räumlich mit der Warteposition der Kommissionierbehälter zusammengefaßt sein kann, erfolgt somit die selbsttätige Übergabe der in dem betreffenden Abschnitt kommissionierten Waren von den Gefachen oder Sammelbehältern in die zugeordneten Kommissionierbehälter, die hinter der Übergabestation abtransportiert werden, und zwar gegebenenfalls zu einem weiteren Abschnitt dieser Zone des Kommissionierlagers, zu einer anderen Zone des Kommissionierlagers oder zum Versand.

Die Erfindung wird im folgenden anhand eines Ausführungsbeispieles näher erläutert. Es zeigt:

Fig. 1 – schematisch in einer Draufsicht einen der Abschnitte der von Hand zu kommissionierenden Zone des erfindungsgemäßen Kommissionierlagers;

Fig. 2 – perspektivisch einen der hierbei verwendeten fahrbaren Wagens;

Fig. 3 – einen Schnitt durch die Übergabestation des Abschnitts nach Fig. 1.

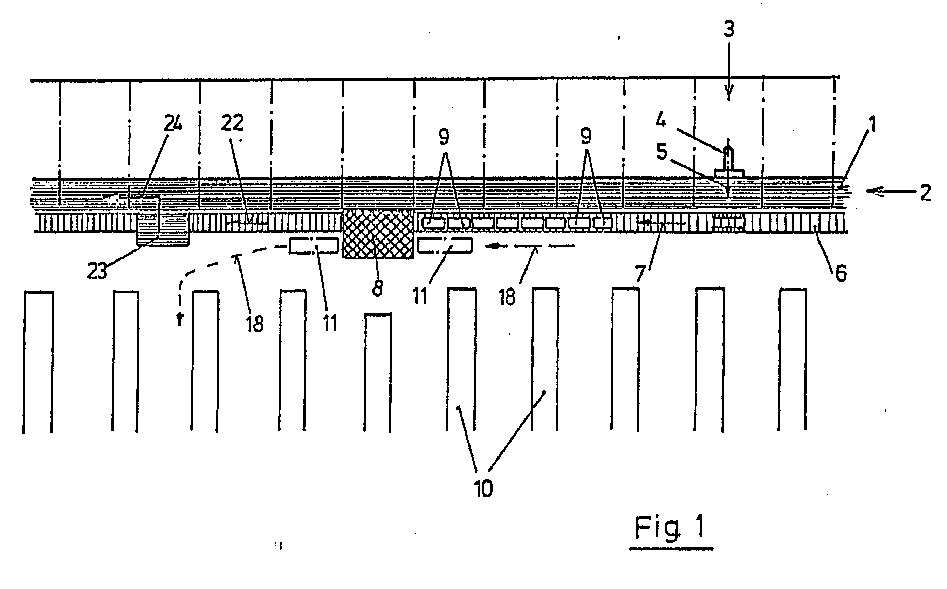

Fig.1 zeigt schematisch nur einen Abschnitt aus einem Kommissionierlager, nämlich einen von mehreren Abschnitten derjenigen Zone dieses Kommissionierlagers, in der von Hand kommissioniert wird. Das Kommissionierlager hat demnach mehrere der im folgenden näher beschriebenen Abschnitte, beispielsweise vier bis acht solcher Abschnitte, die zusammen diejenige Zone des Kommissionierlagers ausbilden, in der nur von Hand kommissioniert wird. Vor oder hinter dieser Zone befinden sich weitere Zonen des Kommissionierlagers, in denen mit einem oder mehreren Fallautomaten und/oder Halbautomaten kommissioniert wird. Es kann zusätzlich noch eine weitere Zone vorgesehen sein, in der ebenfalls von Hand kommissioniert wird, und zwar vorzugsweise für sperrige Artikel.

Kommissionierlager mit unterschiedlichen Zonen entsprechend der Entnahmehäufigkeit, Größe und anderen Eigenschaften der zu kommissionierenden Waren, sind aus der eingangs bereits erläuterten DE-OS 31 00 020 bekannt.

Im folgenden sei zunächst anhand von Fig. 1 der grundsätzliche Verfahrensablauf beim Kommissionieren in dem dargestellten Abschnitt erläutert.

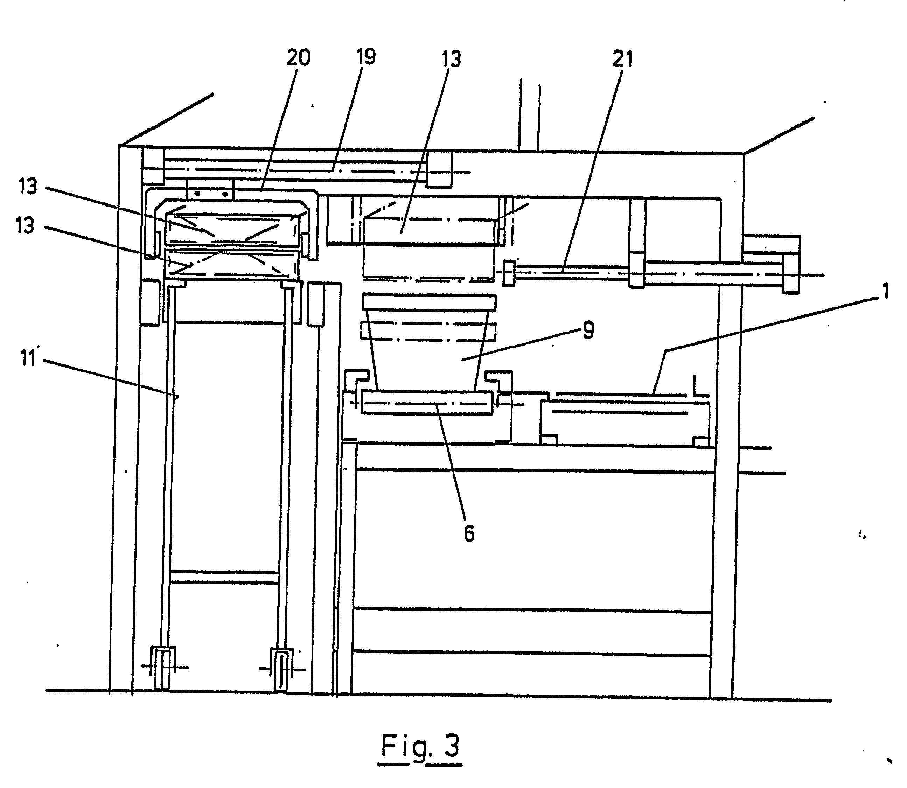

Mit bestimmten Artikeln dieses Abschnitts zu befüllende Kommissionierbehälter werden auf einem Transportband 1 in Richtung des Pfeiles 2 durch alle Zonen des Kommissionierlagers und somit auch an dem in Fig. 1 gezeigten Abschnitt vorbei transportiert. Am Beginn dieses Abschnitts ist eine Übergabestation 3 vorgesehen, die vom Rechner der Anlage gesteuert wird. Die Übergabestation 3 besteht im wesentlichen aus einem Schieber 4 und einer Leseeinrichtung. Stellt diese fest, daß ein Kommissionierbehälter in den Abschnitt einläuft, für den in diesem Abschnitt zu kommissionierende Waren gelagert sind, so wird der Schieber 4 betätigt und transportiert den betreffenden Kommissionierbehälter in Richtung des Pfeiles 5 auf einen ebenfalls angetriebenen, als Staurollenförderer ausgebildeten, Förderer 6, der parallel zum Transportband 1 verläuft. Dort werden die somit von Transportband 1 ausgeschleusten Kommissionierbehälter in Richtung des Pfeiles 7 zu einer Übergabestation 8 transportiert, die im übrigen in Fig. 3 im Schnitt gezeigt ist.

Vor der Übergabestation 8 befindet sich eine Pufferstrecke für die Kommissionierbehälter 9.

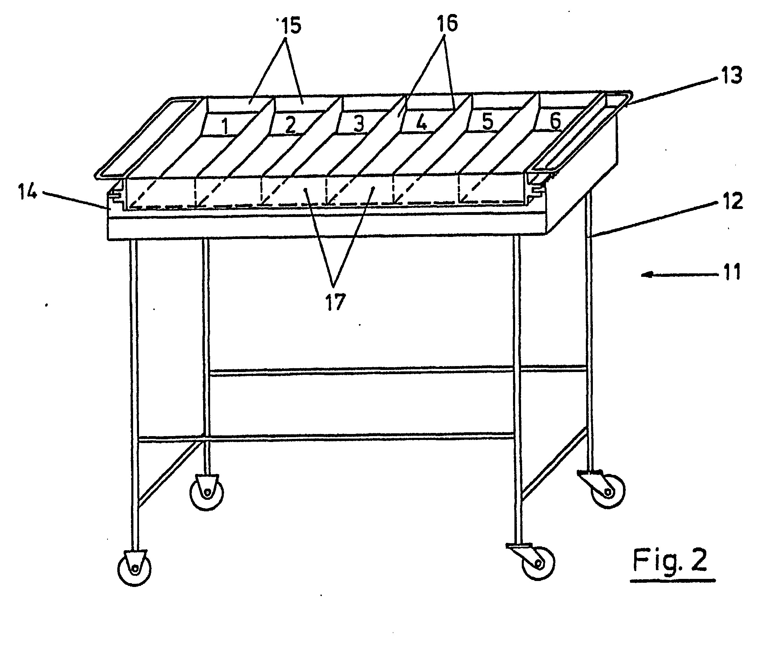

Die Artikel im gezeigten Abschnitt sind in herkömmlichen Regalen 10 gelagert, die zwischen sich Gänge ausbilden. Diese Gänge sind mit einem fahrbaren Wagen 11 von Hand befahrbar, der in Fig. 1 schematisch angedeutet ist und in Fig. 2 perspektivisch gezeigt ist. Der Wagen 11 besteht aus einem Gestell 12 mit Laufrädern. An der Oberseite des Gestells 12 ist eine Wanne 13 über seitliche Führungsschienen 14, leicht lösbar am Gestell 12 gehalten. In der Wanne 13 sind mehrere Gefache 15 parallel zueinander angeordnet. Die Gefache 15 sind gut sichtbar laufend durchnummeriert mit den Ziffern 1 bis 6. Es sei erwähnt, daß Versuche gezeigt haben, daß eine Optimierung bei insgesamt sieben derartigen Gefachen 15 erreicht wird.

Die Gefache 15 sind durch Wände 16 voneinander getrennt. Sie haben Gefacheböden 17, die einzeln und unabhängig voneinander geöffnet werden können. Es können Gefachböden 17 über ein zangenartiges Werkzeug gegriffen und nach Art eines Schiebers herausgezogen werden. Sie können aber auch nach unten geklappt werden.

Der Rechner ist mit einem an der Übergabestation 8 aufgestellten Schnelldrucker verbunden, der für eine bestimmte Anzahl von Kommissionierbehältern 9 entsprechend der Anzahl der Gefache 15 des Wagens 11 Sammelaufträge ausdruckt. Die betreffende Bedienungsperson nimmt jetzt den ausgedruckten Sammelauftrag und legt diesen vorzugweise in die einzelnen Gefache zur besseren Orientierung ein. Sie beginnt dann ihren Kommissionierweg. Dieser ist vom Rechner so ausgesucht, daß er wegeoptimiert ist. Das heißt, daß die Regale 10 in der im ausgedruckten Kommissionierbogen angegebenen Reihenfolge durchfahren werden müssen, um alle Gefache 15 bei kürzest möglichen Wegen mit den in diesen Regalen 10 gelagerten Artikeln befüllen zu können. Dieser Kommissionierweg ist durch die Pfeile 18 angedeutet.

Nach Beendigung dieses Kommissionierganges durch den gezeigten Abschnitt dieser Zone wird der Wagen 11 wieder in die Übergabestation 8 eingefahren. Hierbei schiebt er den jeweils vor sich befindlichen Wagen 11 aus der Übergabestation 8 heraus, der dann von neuem verwendet werden kann. Diese Situation ist in Fig. 3 gezeigt.

Hier ist ein bei Position 19 angedeutetes Hebezeug vorgesehen, das mit Hilfe einer pneumatisch oder hydraulisch betätigten Zange 20, die die Wanne 13 faßt und aus ihrer Halterung am Wagen 11 löst. Die Wanne 13 wird dann angehoben und neben den Wagen 11 über den Förderer 6 transportiert. Dort befindet sich jetzt derjenige der Kommissionierbehälter 9, der mit den Artikeln befüllt werden muß, die sich im ersten der Gefache 15 befinden. Dieses Gefach 15 wird jetzt ebenfalls entleert, indem über einen Schieber 21 der betreffende Gefachboden 17 herausgezogen wird. Die betreffenden Artikel fallen dann in diesen Kommissionierbehälter 9. Anschließend wird der Staurollenförderer 6 wieder angetrieben und der nächste Kommissionierbehälter 9 gelangt unter die Wanne 13, wo dann das nächste Gefach 15 in diesen Kommissioniertbehälter 9 entleert wird uzw. Wenn alle Gefache 15 in die ihnen zugeordneten Kommissionierbehälter 9 entleert worden sind, wird die Wanne 13 wieder auf das Gestell 12 aufgesetzt und der komplettierte Wagen 11 wird aus der Übergabestation 8 herausgefahren und steht für einen erneuten Kommissioniergang zur Verfügung.

Am Eingang der Übergabestation 8 ist ein Anschlag für die Kommissionierbehälter 9 vorgesehen, damit diese in ihrer Warteposition verbleiben können. Die derart befüllten Kommissionierbehälter 9 verlassen dann die Übergabestation 8 in Richtung des Pfeiles 22 und werden in einer Transferstation 23 am Ende dieses Abschnitts in Richtung des Pfeiles 24 wieder auf das Transportband 1 überführt, wo sie weiter transportiert werden.

Wichtig ist es, daß diejenigen Kommissionierbehälter, die in diesem Abschnitt - oder in einem anderen der Abschnitte dieser Zone - kene Waren vorfinden, mit den sie zu befüllen sind, auf dem Transportband 1 diesen für sie nicht interessierenden Abschnitt gewissermaßen überholen können. Alles dies erfolgt rechnergesteuert. Der Rechner entscheidet spontan, welche der Kommissionierbehälter in welchen der Abschnitt ausgeschleust werden sollen, und zwar dies für jeden dieser Abschnitte. Somit wird die Durchlaufzeit der Kommissionierbehälter durch das Kommissionierlager und insbesondere durch die von Hand zu kommissionierende Zone dieses Kommissionierlagers erheblich verkürzt. Für die betreffende Bedienungsperson steht stets ein ausreichender Vorrat an Kommissionierbehältern in der Wartestrecke zur Verfügung. In Zeiten geringeren Betriebes braucht die Person natürlich nicht solange zu warten, bis sich eine Anzahl von Kommissionierbehältern angesammelt hat, die der Anzahl der Gefache 15 entspricht; vielmehr kann er seinen Kommissioniergang auch beginnen, wenn weniger Kommissionierbehälter in Warteposition sind.

Damit den wechselnden Kapazitätsanforderungen Rechnung getragen werden kann, sollen je Arbeitsbereich mindestens zwei Personen zum Einsatz kommen können. Ebenso sollen pro Person mindestens zwei Wagen 11 vorgesehen werden, so daß jeweils einer der Wagen 11 befüllt wird, während der andere in der Übergabestation 8 entleert wird. Gegebenenfalls ist somit für jede Person eine eigene Übergabestation 8 vorgesehen.

Die optimale Losgröße liegt nach durchgeführten Berechnungen zwischen sechs und zehn. Das bedeutet, daß wenigstens sechs und höchstens zehn Gefache 15 vorgesehen sind. Ist die Losgröße kleiner, so dürfte sich im allgemeinen keine wirtschaftliche Wegeoptimierung ergeben. Bei größeren Losgrößen ist die entnehmende Warenmenge zu groß bzw. die Durchlaufzeit für die Aufträge wird wiederum zu lang.

Ein weiterer Vorteil des beschriebenen Systems besteht darin, daß vorhandenen Kommissioniersysteme mit nur geringen Mehrkosten entsprechend umgerüstet werden können.

Die Betätigung des Hebezeugs 19 in der Übergabestation 8 einschließlich nachfolgender Betätigung des Schiebers 21 wird entweder von Kommissionierer von Hand ausgelöst, oder auch selbsttätig dadurch, daß ein neuer Wagen 11 in die Übergabestation 8 eingeschoben worden ist.

## Patentansprüche

1. Verfahren zum rechnergesteuerten Zusammenstellen von Warensendungen aus einem in verschiedene Zonen unterteilten Kommissionierlager, von denen in wenigstens einer Zone von Hand kommissioniert wird, wobei man die auftragsgebundenen, zu befüllenden Kommissionierbehälter (9) rechnergesteuert durch die für den betreffenden Auftrag zu berücksichtigenden Zonen des Kommissionierlagers transportiert und diese dort auftragsgebunden befüllt, dadurch gekennzeichnet, daß man die von Hand zu kommissionierende Zone des Kommissionierlagers in Abschnitte unterteilt, daß man zu jedem der Abschnitte nur die dort zu befüllenden Kommissionierbehälter (9) transportiert und aus diesen Kommissionierbehältern (9) Gruppen bildet, die in einer Warteposition angehalten werden, daß man für jede dieser Gruppen die Waren dieses Abschnitts vom Rechner wegeoptimiert, in einen Satz Sammelbehälter (15) absammelt und daß man darauf die in den Sammelbehältern (15) befindlichen Waren, ebenfalls rechnergesteuert, an die diesen Sammelbehältern (15) zugeordneten, wartenden Kommissionierbehälter (9) übergibt, die man anschließend weitertransportiert.

2. Verfahren nach Anspruch 1, dadurch gekennzeichnet, daß man diejenigen Waren von Hand kommissioniert, die eine verhältnismäßig geringe Entnahmehäufigkeit haben.

3. Verfahren nach Anspruch 1 oder 2, dadurch gekennzeichnet, daß der Rechner für jede Gruppe der Sammelbehälter (15) einen wegeoptimierten Beleg erstellt.

4. Kommissionierlager mit verschiedenen Zonen und mit einer Transporteinrichtung (1, 6) zum Transportieren von Kommissionierbehältern (9), ferner mit einem Rechner zum Zusammenstellen von Warensendungen aus den verschiedenen Zonen und mit wenigstens einer Zone, in der Artikel von Hand kommissioniert werden, dadurch gekennzeichnet, daß zum Kommissionieren der Artikel in der von Hand zu kommissionierenden Zone Sammelbehälter (z.B. als Gefache ausgebildet) an einem von Hand fahrbaren Wagen (11) vorgesehen sind, die in einer Übergabestation (8) rechnergesteuert in den der betreffenden Kommission zugeordneten Kommissionierbehälter (9) entleert werden.

5. Kommissionierlager nach Anspruch 4, dadurch gekennzeichnet, daß die Gefache (15) an einer vom Gestell des fahrbaren Wagens (11) trennbaren Wanne (13) ausgebildet sind.

6. Kommissionierlager nach Anspruch 4 oder 5, dadurch gekennzeichnet, daß die Gefachböden (17) einzeln geöffnet und geschlossen werden können.

7. Kommissionierlager nach Anspruch 5 oder 6, dadurch gekennzeichnet, daß die Übergabestation (8) ein Hebezeug für die Wanne (13) aufweist, das die Wanne (13) mit den Gefachen (15) über einen angetriebenen Förderer (6) für die Kommissionierbehälter (9) transportiert, wo ein Antrieb zum gesteuerten Öffnen und Schließen der Gefachböden (17) vorgesehen ist.

**Claims**

1. Method of computerized commissioning of consignments of goods from a commissioning storehouse separated into different zones of which at least in one zone commissioning is made manually, wherein the commissioning containers (9) with fixed orders and to be filled are transported computerized through the zones to be considered for the respective order, and where these are filled with fixed orders, characterized in that the zone of the commissioning store to be commissioned manually is spaced into segments, that to each of the segments only the commissioning containers (9) to be filled there are transported, and of these commissioning containers (9) groups are provided which are held in a waiting position, that for each of these groups the goods of this segment the transportation ways are optimized by the computer, that same are collected into a collecting container (15) and that then the goods in the collecting containers (15) are transmitted controlled by the computer to the commissioning containers (9) which are assigned to the waiting collecting containers (15) which containers subsequently are further transported.

2. Method according to claim 1, characterized in that such goods are commissioned manually which have a relatively small removal frequency.

3. Method according to claim 1 or 2, characterized in that the computer is plotting for each group of collecting containers (15) a voucher with optimized transportation way.

4. Commissioning store with different zones and with a transport device (1, 6) for the transporting of commissioning containers (9), further comprising a computer for the commissioning of consignments of goods from the different zones and at least one zone in which the articles are commissioned manually, characterized in that for the commissioning of the articles in the zone commissioned manually, collecting containers (for instance provided as partitions) on a manually drivable vehicle (11) are provided which are discharged in a transmitting station controlled by a computer into the for the respective commission assigned commissioning containers (9).

5. Commissioning store according to claim 4, characterized in that the partitions (15) are provided at a trough (13) separatable from a support of the drivable vehicle.

6. Commissioning store according to claim 4 or 5, characterized in that the bottoms of the partitions (17) can be opened and closed individually.

7. Commissioning store according to claim 5 or 6, characterized in that the transmission station (8) is including a lifting device for the trough (13) transporting the trough (13) with the partitions via a driven conveyor (5) for the commissioning containers (9), where a drive for the controlled opening and closing of the bottom of the partitions (17) is provided.

**Revendications**

1. Procédé pour la composition commandée par ordinateur d'envois de marchandises à partir d'un magasin de préparation des commandes divisé en différentes zones dont au moins l'une est préparée à la main, dans lequel on transporte le récipient de préparation (9) à remplir et en attente de commandes, par contrôle par ordinateur, à travers les zones du magasin à prendre en considération pour la commande concernée et on remplit ledit récipient ainsi en attente, caractérisé en ce qu'on divise la zone à préparer manuellement en sections, en ce qu'on transporte seulement le récipient de préparation à remplir vers chaque section et en ce qu'on forme des groupes à partir de ces récipients, lesdits groupes étant maintenus dans une position d'attente, en ce qu'on optimise en cheminement, par ordinateur, pour chaque groupe, les marchandises de cette section, que l'on collecte dans un collecteur de groupe (15), et en ce qu'on transmet, également par ordinateur, les marchandises situées dans ce collecteur (15) vers le récipient de préparation (9) correspondant à et en attente de ces collecteurs (15).

2. Procédé selon la revendication 1, caractérisé en ce qu'on prépare à la main les marchandises qui ont une fréquence de prélèvement relativement faible.

3. Procédé selon l'une des revendications 1 ou 2, caractérisé en ce que l'ordinateur établit pour chaque groupe du collecteur (15), une pièce justificative optimisée en cheminement.

4. Magasin de préparation de commandes comprenant plusieurs zones et un dispositif de transport (1, 6) pour transporter des récipients de préparation de commandes (9), un ordinateur pour composer l'envoi de marchandises à partir des différentes zones et au moins une zone dont les articles sont préparés à la main, caractérisé en ce que sont prévus des récipients de collecteur, par exemple conformés en case, pour la préparation des commandes des articles situés dans la zone à préparer manuellement, lesdits récipients étant disposés sur un véhicule (11) pilotable manuellement, et vidés, d'une manière pilotée par ordinateur, dans un poste de transfert (8), dans le récipient de préparation de commandes correspondant à la préparation concernée.

5. Magasin selon la revendication 4, caractérisé en ce que lesdites cases (15) sont conformées sur une cuve amovible (13) d'un châssis du véhicule pilotable (11).

6. Magasin selon la revendication 4 ou 5, caractérisé en ce que les corps de case (17) sont séparément ouverts et fermés.

7. Magasin selon la revendication 5 ou 6, caractérisé en ce que le poste de transfert (8) présente un palan pour la cuve (13), ledit palan transportant la cuve (13) munie de ses cases (15) sur un convoyeur à entraînement (6) pour le récipient de préparation de commandes (9), et dans lequel un actionneur est prévu pour ouvrir et fermer, par ordinateur, les corps de case (17).

Fig 1

Fig. 2

EP 0 215 967 B1

Fig. 3

EP 0 215 967 B1